# EUROPEAN PATENT APPLICATION

(11) **EP 4 830 855 A1**
(43) Date of publication of application: **28.10.2026**
(21) Application number: 25220655.2
(22) Date of filing: 04.12.2025
(51) Int. Cl.: B23D 79/02, B23C 1/20

(54) **ALL-WEATHER WELD BEAD REMOVER WITH STRAIGHT-LINE DRIVING CAPABILITY**

(30) Priority: 09.04.2025 KR 20250046297
(71) Applicant: Daesunggt Co., Ltd., Daedeok-gu Daejeon 34433 (KR)
(72) Inventor: JEON, Byung Woo, 34433 Daedeok-gu, Daejeon (KR); JEON, Byeong Gwon, 34379 Daedeok-gu, Daejeon (KR)
(74) Representative: v. Bezold & Partner Patentanwälte - PartG mbB

(57) **Abstract**

Weld bead remover with a straight-line driving capability, comprising: an actuator (20) attached to a rear end of a gearbox (10); and a cutter (40) integrally coupled to a cutter shaft (30) that is rotatably installed at a front inner portion of the gearbox (10) in a direction orthogonal to the actuator (20) and rotates by receiving rotational power of the actuator (20) through a plurality of gear combinations, the cutter (40) rotating in the same direction as a driving direction of a weld bead remover (R) while in a vertical state to secure straight-line driving capability, wherein the gearbox (10) includes a first gear operating part (12) that is connected to a through hole (11) formed on a rear surface thereof and formed inside one side of a rear portion thereof, a second gear operating part (13) that is connected to the first gear operating part (12) and recessed on the other outer surface of the gearbox (10), an inner surface of the second gear operating part (13) being formed with a plurality of bearing insertion grooves (14), (14a) and a bearing insertion part (15), and a cutter operating part (16) that is connected to the bearing insertion part (15) and formed at a front portion of the first gear operating part (12).

## Description

### TECHNICAL FIELD

The present disclosure relates to a novel concept technology for removing weld beads quickly and safely by demonstrating reliable straight-line driving capability even when operating on a base material on which it is difficult to fix a weld bead remover using a magnet.

### BACKGROUND

In general, at urban gas pipeline construction sites, industrial plant piping construction sites, etc., as preparatory operation for welding, by cutting relatively large-sized base materials (metal sheets, pipes, etc.) to the required length and then by performing a beveling process in which welding surfaces (chamfered surfaces) of the base material are cut at a predetermined angle to form a weld groove (root), an operator integrally connects the pair of easily cut base materials to each other by butt welding the welding surfaces formed on the base materials.

Here, the weld metal formed in the weld groove during the welding process is called a weld bead. Typically, the weld bead protrudes above the surface of the base material. In particular, poor welded portion will protrude even further than other portion, and the weld bead may bounce around and adhere to the surface of the base material, thereby forming unnecessary protrusions.

Therefore, a separate post-processing operation is required to remove the welding bead and unnecessary protrusions to ensure that the welding bead and unnecessary protrusions remain flush with the surface of the base material.

Conventional methods for removing such welding beads and protrusions mostly involve primitive manual techniques that rely on the operator's experience and skill using a grinder, but have many side effects. As prior art document to address this issue, the applicant's previously registered invention, entitled "Patent Registration No. 10-1081345: Removal Apparatus for Weld-Bead and Protrusion with Safety Driving Function," is disclosed.

The prior art document discloses a useful technique in which a safety guider that guides a linear movement of a main body head may be temporarily fixed only during operation by utilizing magnetic force on the surface of the base material, and the safety guider is capable of guiding accurate straight-line driving of the weld bead and protrusion remover.

### SUMMARY

However, in the prior art, when it is difficult to attach a magnet due to the characteristics of the base material, the straight-line driving capability becomes impossible. As a result, during operation, a centrifugal force generated by a cutter rotating in a horizontal state causes a main body head to be biased toward one side (rotation direction), which may cause the main body head to bounce off and lead to safety accidents such as injuries.

In addition, after removing the weld bead by the full length of the safety guider, an operator should release a magnet, move the magnet to a new position, and then re-fix the magnet to perform the re-operation. As a result, the operation should inevitably be interrupted from time to time, resulting in a decrease in operation efficiency.

Furthermore, however, in the prior art, the magnet may be attached only to plate materials, and it is difficult to attach the magnet to the pipe. Therefore, the weld bead on the pipe may not be removed, resulting in the decrease in the utility of the product.

The present disclosure provides a technology in which a cutter vertically coupled to a cutter shaft that rotates horizontally by receiving rotational power from an actuator through a gear combination rotates in the same direction as a driving direction of a weld bead remover, thereby ensuring straight-line driving capability and smoothly removing a weld bead without fixing a separate magnet.

Furthermore, the present disclosure provides a technology in which a tilting angle of a pair of skid plates, which is installed in the front-and-rear direction on both sides of a skid plate support attached to lower portions of front and rear surfaces of side plates in close contact with both sides of a gearbox, is freely adjusted, thereby accurately guiding straight-line movement along a longitudinal direction while mounted on both sides of a base material such as a pipe.

Furthermore, the present disclosure provides a technology in which a driving roller support is raised and lowered along a support elevating holder installed at a rear upper end of a pair of skid plates to control a vertical position of a driving roller, thereby allowing the driving roller to smoothly travel along a longitudinal direction while mounted on a base material such as a pipe regardless of its diameter.

### BRIEF DESCRIPTION OF THE DRAWINGS

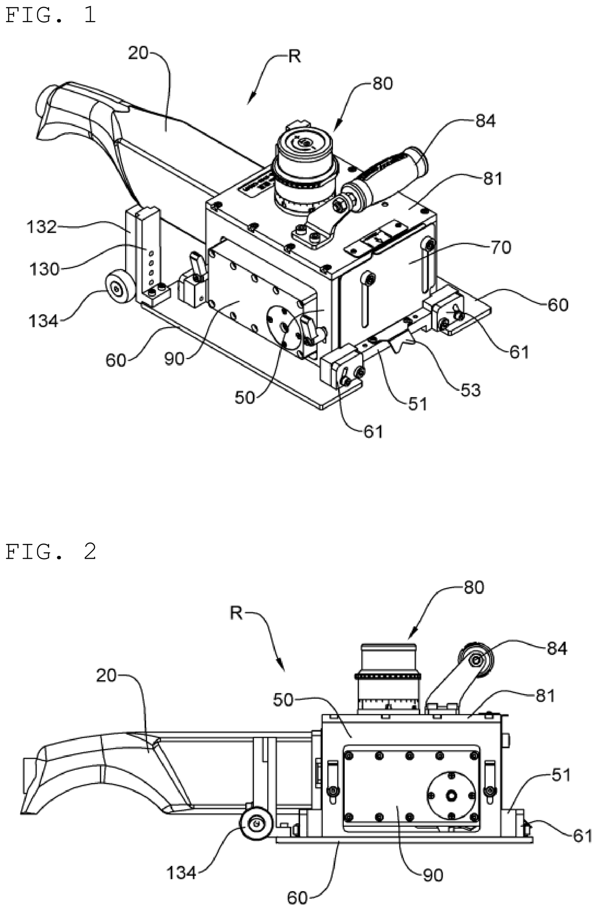

FIG. 1 is a perspective view of a weld bead remover to which the present disclosure is applied.
FIG. 2 is a front view of a weld bead remover of the present disclosure.
FIG. 3 is a right side view of a weld bead remover of the present disclosure.
FIG. 4 is a bottom view of the weld bead remover of the present disclosure.
FIG. 5 is a plan sectional view illustrating an internal structure of the weld bead remover of the present disclosure.
FIG. 6 is a side sectional view illustrating the internal structure of the weld bead remover of the present disclosure.
FIG. 7 is a side sectional view illustrating a connection state of a gearbox and a removal amount controller of the present disclosure.
FIG. 8 is a side sectional view illustrating a connection state of a cutter shaft and a cutter of the present disclosure.
FIG. 9 is a perspective view of a gearbox of the present disclosure.
FIG. 10 is a front view of the gearbox of the present disclosure.
FIG. 11 is a plan sectional view of the gearbox of the present disclosure.
FIG. 12 is a perspective view of a bearing case of the present disclosure.
FIG. 13 is a rear view of the bearing case of the present disclosure.
FIG. 14 is a plan sectional view of the bearing case of the present disclosure.
FIG. 15 is a side view of a state in which a pipe of the weld bead remover according to the present disclosure is mounted.
FIG. 16 is a side view of a tilting angle adjustment state of a skid plate of the present disclosure.
FIG. 17 is a side view of a tilting angle adjustment completion state of the skid plate of the present disclosure.
FIG. 18 is a front cross-sectional view of a support elevating holder and a driving roller support of the present disclosure.
FIG. 19 is a plan cross-sectional view of a support elevating holder and a driving roller support of the present disclosure.

### DETAILED DESCRIPTION OF EMBODIMENTS

Hereinafter, preferred embodiments will be described to more specifically implement means for solving the problem to be solved by the present disclosure.

The overall configuration of a weld bead remover R according to a preferred embodiment of the present disclosure will be schematically described with reference to the attached drawings, and it can be seen that it is largely divided into components of a gearbox 10, an actuator 20, and a cutter 40.

Hereinafter, the present disclosure composed of the above-described schematic configuration will be described in more detail to facilitate implementation.

The gearbox 10 of the present disclosure includes an actuator 20 for power generation attached to a rear end thereof, and serves as a housing that houses a number of gears for power transmission and a cutter shaft 30 for removing weld beads installed therein.

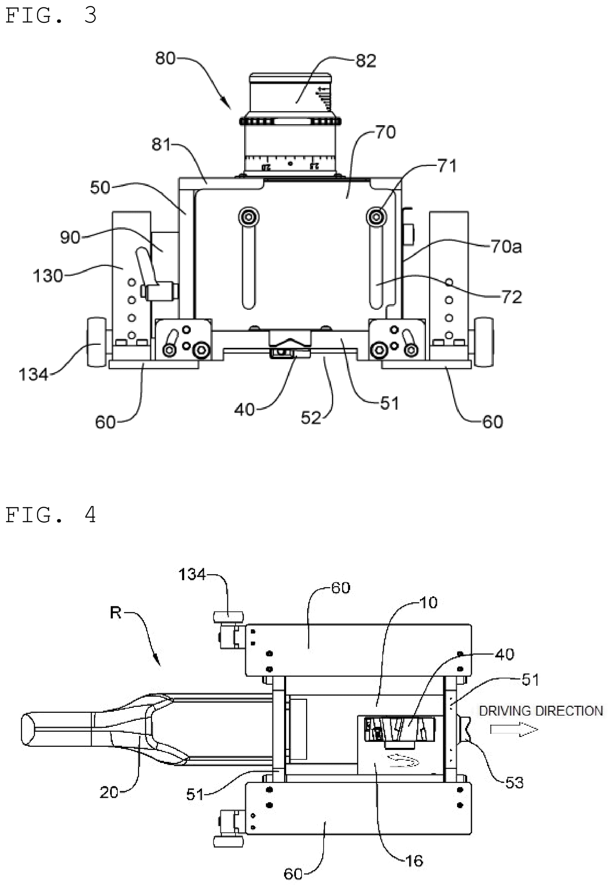

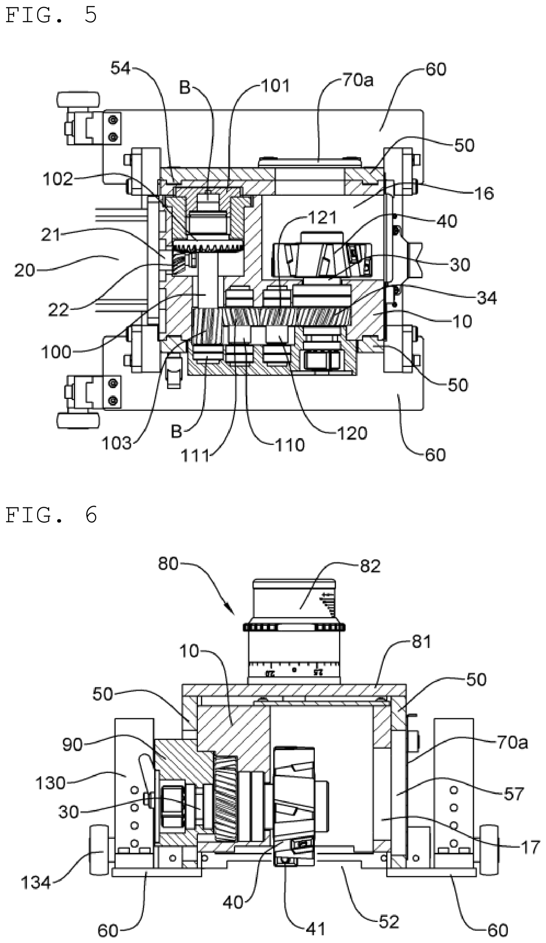

The key point of the present disclosure is that a cutter shaft 30, positioned in a direction orthogonal to the actuator 20 is rotatably installed within a front inner portion of the gearbox 10 by receiving rotational power of the actuator 20 through a multiple gear combinations, a cutter 40 is integrally coupled to a portion of the cutter shaft 30 exposed to the cutter operating part 16, and the cutter 40 rotates in the same direction as a driving direction of the weld bead remover R in a vertical state when viewed from above and below, as illustrated in FIGS. 4 and 5, thereby securing straight-line driving capability.

Therefore, the present disclosure smoothly removes weld beads without requiring separate fixing and disassembling operations using magnets as in the prior art, and prevents the weld bead remover R from bouncing due to the biasing of the cutter, thereby eliminating concerns about injuries and safety accidents.

??Here, the cutter 40 is incorporated with a technology that allows the cutter 40 to be separated from the cutter shaft 30 for replacement of an insert tip 41, which is a consumable part, when the insert tip 41 wears out.

As the technical configuration for this purpose, a stepped cutter support part 31 is formed on an outer circumferential surface of the cutter shaft 30 positioned at the cutter operating part 16, the cutter 40 is fitted into the cutter support part 31, a cutter fixing bolt 32 that is screw-coupled to the cutter shaft 30 by penetrating through a fixing cap 36 fitted into a front end of the cutter 40 is tightened, so the integrity of a side surface of the cutter 40 may be maintained while the fixing cap 36 pressurizes and fixes the side surface of the cutter 40, but the insert tip 41 is replaced by loosening the cutter fixing bolt 32 and separating the cutter 40.

When tightening or loosening the cutter fixing bolt 32, a tool such as a wrench is inserted into a wrench groove 33 formed at the other front end of the cutter shaft 30 so that the cutter shaft 30 cannot rotate, and the cutter fixing bolt 32 can be smoothly tightened or loosened while holding the tool to prevent movement.

The gear box 10 has a pair of side plates 50 attached to both sides, and a skid plate support 51 is integrally attached to lower portions of the front and rear surfaces of the side plates 50, and a plate-shaped skid plate 60 that slides along a surface of the base material is integrally attached to lower ends of both sides of the skid plate support 51.

Here, a weld bead avoidance groove 52 is formed recessed upward on a central bottom surface of the skid plate support 51 to prevent interference with the weld bead protruding from the surface of the base material. In particular, a driving aiming hole 53 positioned in a straight line with the cutter 40 is attached to an upper end of the skid plate support 51 located in the front, thereby providing the effect of maintaining operation accuracy by sliding a weld bead remover R by aligning the driving aiming hole 53 with the weld bead.

In addition, a chip scatter prevention plate 70 is installed to close the front surface of the pair of side plates 50, and a fixing bolt 71 is screw-coupled to a front surface of the gear box 10 by penetrating through a guide long hole 72 formed vertically long on both sides of the chip scatter prevention plate 70, thereby preventing chips generated when removing the weld bead from scattering to the outside, and checking and inspecting whether there is an abnormality in the cutter 40 while the chip scatter prevention plate 70 is lifted upward and opened. ??In addition, tool input ports 17 and 57 for inserting a tool such as a driver for tightening or loosening the cutter fixing bolt 32 is formed on outer surfaces of one side of the side plate 50 and the gear box 10, and a chip scatter prevention plate 70a for blocking the tool input port 57 formed on the side plate 50 is installed on the side plate 50 to be openable.

Meanwhile, the present disclosure incorporates a novel technology that serves to not only support the gearbox 10 and cutter 40 so that they do not move up and down but also maintains a fixed position, but also allow the removal amount of weld beads to be optimally controlled while selectively adjusting the up and down position of the cutter 40 to reduce a load.

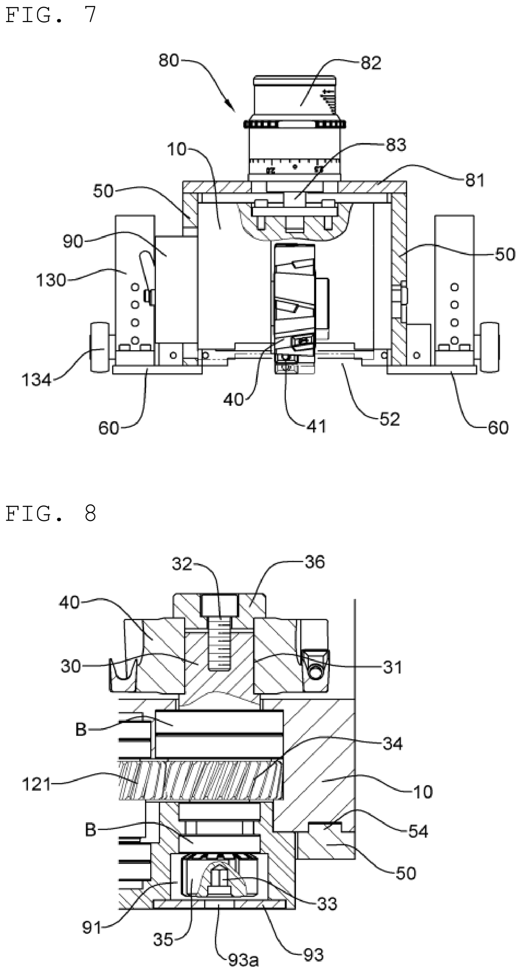

As a technical configuration for this purpose, as illustrated in FIG. 7, a top plate 81 is integrally connected and installed to close the upper portion of the gear box 10 on the upper end of the pair of side plates 50, a removal amount controller 80 is installed on the upper end of the top plate 81 so that a moving shaft 83 moves up and down according to a rotation operation of a adjustment head 82, and the moving shaft 83 is integrally connected to the upper end of the gear box 10 by penetrating through the top plate 81, so that the gear box 10 and the cutter 40 move up and down according to the forward and reverse rotation operation of the adjustment head 82 to freely adjust the removal amount of the weld bead. Meanwhile, a handle 84 is attached to a front upper surface of the top plate 81.

Here, the pair of side plates 50 has a pair of guide projections 54 protruding before and after the inner surface, and the guide projections 54 are fitted into guide grooves 18 recessed on both sides of the gear box 10, thereby providing the effect of smoothly guiding the vertical elevating movement of the gear box 10.

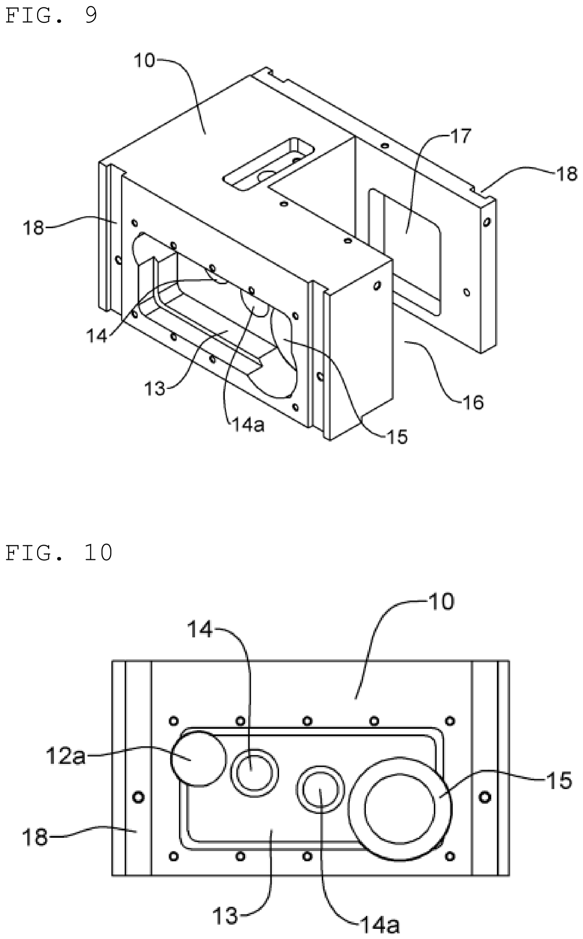

The specific technical configuration of the gearbox 10 of the present disclosure described above will be described with reference to FIGS. 9 to 11. A through hole 11 is formed in the center of the rear surface through which the power shaft 21 of the actuator 20 may pass, a first gear operating part 12 connected to the through hole 11 is formed on the inside of one rear side, and a second gear operating part 13 connected to the first gear operating part 12 via a shaft passage 12a is formed by recessed into the other outer surface of the gearbox 10. Meanwhile, a plurality of bearing insertion grooves 14 and 14a and bearing insertion parts 15 are obliquely formed spaced apart from each other on an inner surface of the second gear operating part 13, and a cutter operating part 16 connected to the bearing insertion part 15 is formed to penetrate vertically in front of the first gear operating part 12.

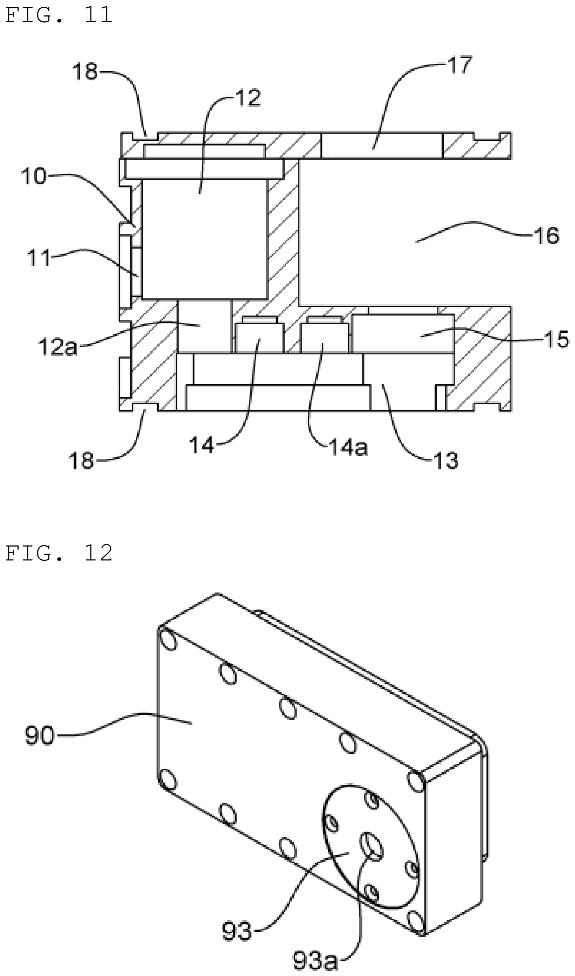

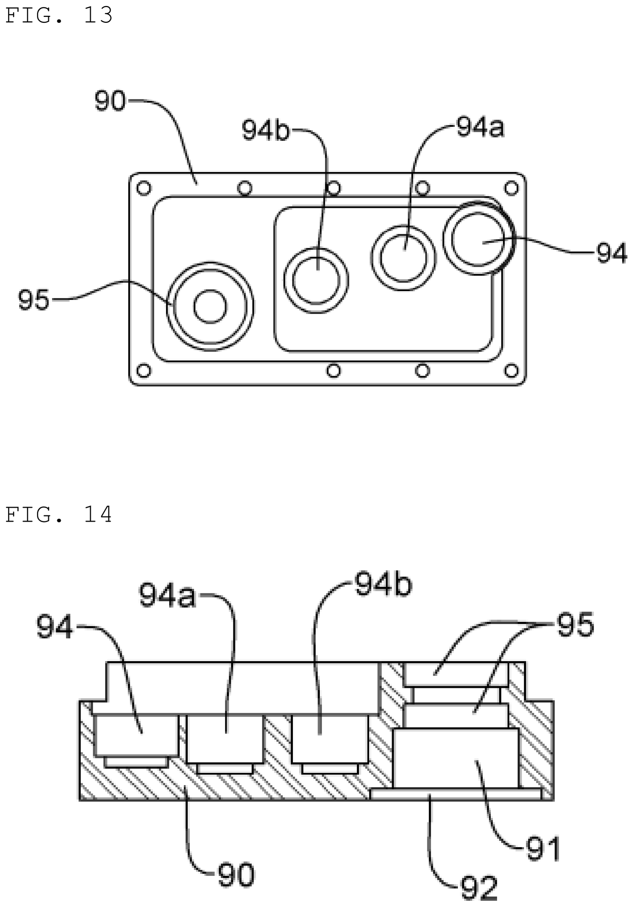

A bearing case 90 for accommodating and covering a plurality of bearings B is installed to cover the second gear operating part 13. As illustrated in FIGS. 12 to 14, the bearing case 90 has a plurality of bearing insertion grooves 94, 94a, and 94b and a bearing insertion part 95 formed obliquely spaced apart from each other on an inner surface.

Here, a nut insertion part 91 and a cover insertion groove 92 are formed continuously on one side of the bearing insertion part 95, and a nut 35 is screw-coupled to the front end of the cutter shaft 30 that is rotatably supported by the bearings B that are inserted into the bearing insertion part 16 of the gear box 10 and the bearing insertion part 95 of the bearing case 90, thereby preventing the cutter shaft 30 from being separated from the gear box 10, and a cutter shaft cover 93 preventing exposure of the cutter shaft 30 is inserted and installed in the cover insertion groove 92, and a wrench through hole 93a is formed in the center of the cutter shaft cover 93.

Next, a gear combination configuration to transmit the rotational power of the actuator 20 to the cutter shaft 30 through the plurality of gear combinations at an optimal gear ratio and ensure the straight-line driving capability while allowing the cutter 40 of the present disclosure to rotate in the same direction as the driving direction of the weld bead remover R will be described.

As the technical configuration for this purpose, in the present disclosure, as illustrated in FIG. 5, the main gear 22 is integrally coupled to the power shaft 21 that penetrates through the through hole 11 of the gear box 10 and is drawn into the first gear operating part 12, the bearings B, which are inserted into the bearing insertion groove 94 formed in the bearing housing 101 installed in the first gear operating part 12 and the bearing case 90, rotatably support both sides of the driven shaft 100, and the main gear 22 meshes with a first driven gear 102 coupled to one side of the driven shaft 100.

A second driven gear 103 formed on the other side of the driven shaft 100 meshes with a first idle gear 111 formed on a first idle shaft 110, both sides of which are rotatably supported by the bearings B that are inserted into the bearing insertion groove 14 formed in the second gear operating part 13 and the bearing insertion groove 94a formed in the bearing case 90, the first idle gear 111 meshes with a second idle gear 121 formed on a second idle shaft 120, both sides of which are rotatably supported by the bearings B that are inserted into the bearing insertion groove 14a formed in the second gear operating part 13 and the bearing insertion groove 94b formed in the bearing case 90, and the second idle gear 121 meshes with a third driven gear 34 formed on the cutter shaft 30, both sides of which are rotatably supported by the bearings B that are inserted into the bearing insertion part 15 formed in the second gear operating part 13 and the bearing insertion part 95 formed in the bearing case 90.

Therefore, the rotational power of the actuator 20 is transmitted to the driven shaft 100 through the main gear 22 and the first driven gear 102, and the rotational power of the driven shaft 100 is converted into an optimal gear ratio through the second driven gear 103, the first idle gear 111, the second idle gear 121, and the third driven gear 34 and transmitted to the cutter shaft 30, so the cutter 40 provides the straight-line driving capability while rotating in the same direction as the driving direction of the weld bead remover R.

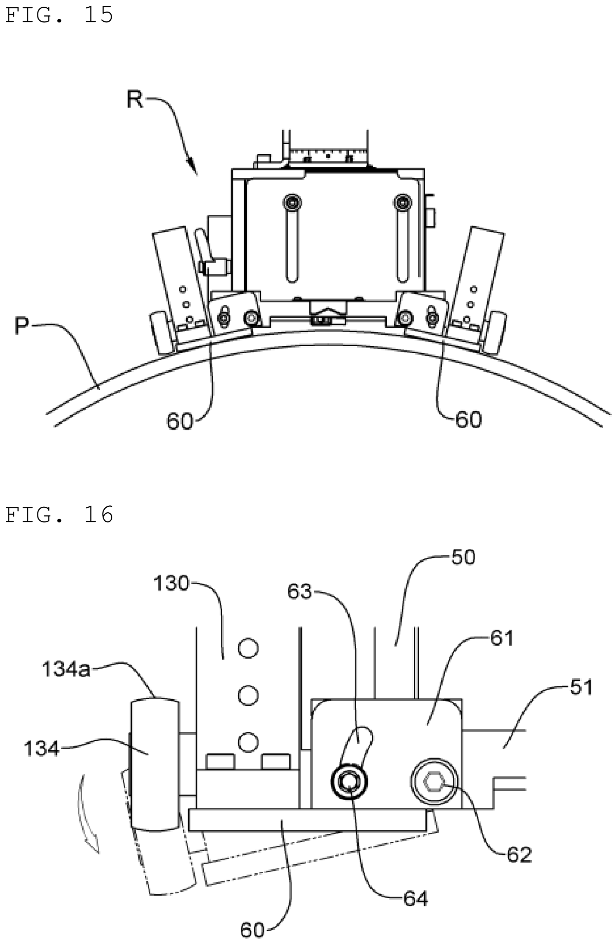

Meanwhile, the present disclosure relates to a method for freely adjusting the tilting angle of the pair of skid plates 60, and incorporates a novel technology that may accurately guide the straight-line movement along a longitudinal direction of a pipe P while being seated on both sides of a surface of a base material such as the pipe P, as illustrated in FIG. 15.

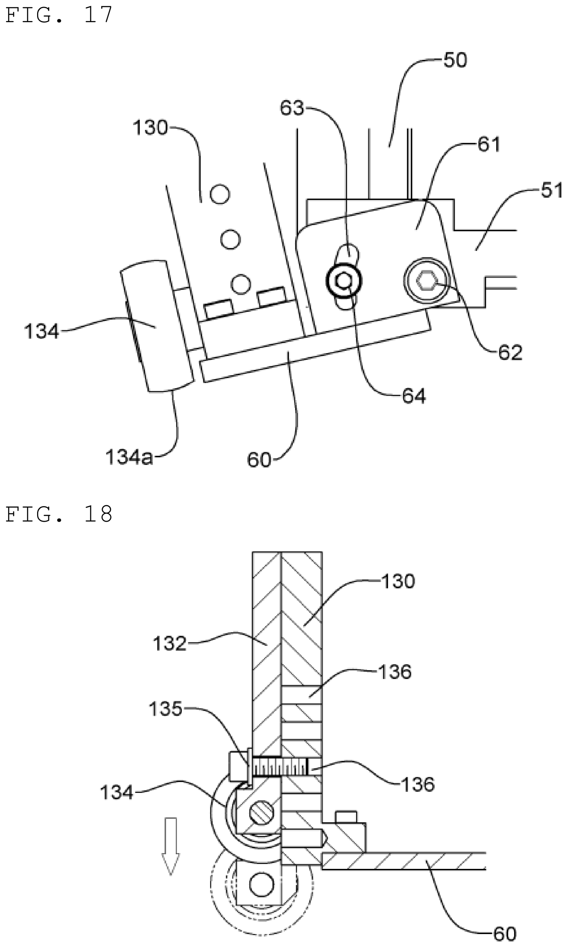

As the technical configuration for this purpose, as illustrated in FIGS. 16 and 17, the tilting plate 61 is integrally attached before and after the upper end of the pair of skid plates 60, respectively, a pivot bolt 62 is screw-coupled to the skid plate support 51 by penetrating through the tilting plate 61, and a tilting control bolt 64, which penetrates through a guide long hole 63 formed in the tilting plate 61 along a circumferential direction around the pivot bolt 62, is screw-coupled to the skid plate support 51.

Therefore, by adjusting the tilting angle by rotating the skid plate 60 downward around the pivot bolt 62 while releasing the tightening of the tilting control bolt 64, the skid plate 60 is seated on both sides of the surface of the pipe P regardless of the diameter of the pipe P, it is possible to remove the weld beads while sliding along the longitudinal direction of the base material such as the pipe P.

In addition, the present disclosure incorporates a novel technology that allows smooth straight-line drive along the longitudinal direction of the pipe P without moving left and right while being seated on both sides of the surface regardless of the diameter of the base material such as the pipe P by adjusting the vertical position of the driving roller 134 installed at the rear of a pair of skid plates 60.

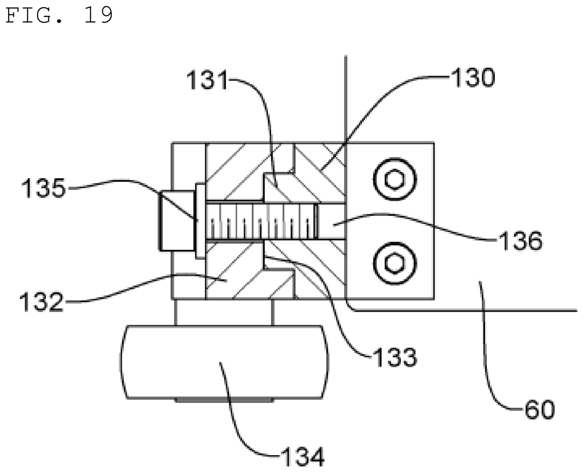

As the technical configuration for this purpose, according to the present disclosure, as illustrated in FIGS. 18 and 19, the rear upper end of the pair of skid plate 60 is provided with a support elevating holder 130 having a guide projection 131 protruding at a central portion of a rear surface thereof, a guide groove 133 into which the guide projection 131 formed on the support elevating holder 130 is fitted and coupled is recessed in the driving roller support 132 in close contact with the rear surface of the support elevating holder 130 in a vertically movable manner and a driving roller 134 is rotatably installed at the lower portion thereof, and an elevating control unit 135 coupled by penetrating through the driving roller support 132 is screw-coupled to any one of the plurality of fixing holes 136 formed vertically in the support elevating holder 130.

Therefore, by vertically moving the driving roller support 132 to adjust the vertical position of the driving roller 134, the driving roller 134 may be driven while the driving roller 134 is seated on both sides of the surface of the pipe P regardless of the curved surface specification or the specification of the pipe P, thereby providing the effect of securing the accurate straight-line driving capability along the longitudinal direction of the pipe P while preventing the left-right movement of the weld bead remover R.

Here, the driving roller 134 of the present disclosure is formed with a curved roller surface 134a on its outer circumference so that it may smoothly drive while the center of the driving roller 134 is always seated on the circumference of the pipe P regardless of the diameter of the pipe P, thereby providing the effect of enhancing smooth driving and preventing warping of the driving roller 134 due to load imbalance to improve durability.

According to the present disclosure, a vertically installed cutter rotates in the same direction as the driving direction of the weld bead remover to secure the accurate straight-line driving capability, so the weld bead may be smoothly removed without fixing the cutter using a separate magnet and the bouncing of the weld bead remover caused by biasing of a cutter may be prevented, thereby eliminating concerns about injuries and safety accidents and reducing operator's fatigue.

Furthermore, according to the present disclosure, by not only eliminating both the fixing and disassembling operations that use a separate magnet but also removing restrictions on the one-time movement distance of the weld bead remover to minimize unnecessary operation stoppages, it is possible to significantly improve operation efficiency and enhance economic feasibility by reducing labor costs.

Furthermore, according to the present disclosure, by the method of adjusting the tilting angle of the pair of skid plates that slide while mounted on the surface of the base material, the weld bead remover is able to slide along both surfaces of the base material such as the pipe to enable the removal of the weld bead formed on the pipe, it becomes possible to provide excellent versatility for all-weather processing of various types of base materials (plates and pipes).

Furthermore, according to the present disclosure, by the method of removing the weld bead from the base material such as the pipe to adjust the vertical position of the pair of driving rollers installed at the rear end of the skid plates and to drive the pair of driving rollers along both sides of the surface of the pipe, it is possible to secure the accurate straight-line driving capability along the longitudinal direction of the pipe and enable the improved efficiency and safety in the weld bead removal operation.

## Claims

1. An all-weather weld bead remover with a straight-line driving capability, comprising:
an actuator (20) attached to a rear end of a gearbox (10); and
a cutter (40) integrally coupled to a cutter shaft (30) that is rotatably installed at a front inner portion of the gearbox (10) in a direction orthogonal to the actuator (20) and rotates by receiving rotational power of the actuator (20) through a plurality of gear combinations, the cutter (40) rotating in the same direction as a driving direction of a weld bead remover (R) while in a vertical state to secure straight-line driving capability,
wherein the gearbox (10) includes a first gear operating part (12) that is connected to a through hole (11) formed on a rear surface thereof and formed inside one side of a rear portion thereof, a second gear operating part (13) that is connected to the first gear operating part (12) and recessed on the other outer surface of the gearbox (10), an inner surface of the second gear operating part (13) being formed with a plurality of bearing insertion grooves (14), (14a) and a bearing insertion part (15), and a cutter operating part (16) that is connected to the bearing insertion part (15) and formed at a front portion of the first gear operating part (12) so as to vertically penetrate.

2. An all-weather weld bead remover with a straight-line driving capability, comprising:
an actuator (20) attached to a rear end of a gearbox (10); and
a cutter (40) integrally coupled to a cutter shaft (30) that is rotatably installed at a front inner portion of the gearbox (10) in a direction orthogonal to the actuator (20) and rotates by receiving rotational power of the actuator (20) through a plurality of gear combinations, the cutter (40) rotating in the same direction as a driving direction of a weld bead remover (R) while in a vertical state to secure straight-line driving capability,
wherein a skid plate support (51) is integrally attached to lower portions of front and rear surfaces of a pair of side plates (50) in close contact with both side surfaces of the gearbox (10), respectively, and a skid plate (60) is integrally attached to lower ends of both sides of the skid plate support (51), respectively, and
the skid plate (60) is provided with a pivot bolt (62) that is screw-coupled to a skid plate support (51) by penetrating through tilting plates (61) respectively attached to front and rear portions of an upper side thereof, and a tilting control bolt (64), which penetrates through a guide long hole (63) formed along a circumferential direction on the tilting plate (61), is screw-coupled to the skid plate support (51) .

3. The all-weather weld bead remover of claim 1, wherein a top plate (81) is connected to and installed on an upper end of a pair of side plates (50) in close contact with both sides of the gear box (10), a moving shaft (83) of a removal amount controller (80) installed on an upper end of the top plate (81) is integrally connected to an upper end of the gear box (10) by penetrating through the top plate (81), and a pair of guide projections (54) that protrude at front and rear of an inner surface of the pair of side plates (50) are fitted into guide grooves (18) formed on both sides of the gear box (10).

4. The all-weather weld bead remover of claim 1, wherein the second gear operating part (13) is closed with a bearing case (90), and an inner surface of the bearing case (90) is provided with a plurality of bearing insertion grooves (94), (94a), and (94b) and a bearing insertion part (95).

5. The all-weather weld bead remover of claim 1, wherein a main gear (22) integrally connected to a power shaft (21) drawn into the first gear operating part (12) by penetrating through the through hole (11) of the gear box (10) is meshed with a first driven gear (102) formed on one side of a driven shaft (100) that is rotatably installed on both sides of the first gear operating part (12) and the bearing case (90), a second driven gear (103) formed on the other side of the driven shaft (100) is meshed with a first idle gear (111) formed on a first idle shaft (110) that is rotatably installed on both sides of the second gear operating part (13) and the bearing case (90), and the first idle gear (111) is meshed with a second idle gear (121) formed on a second idle shaft (120) that is rotatably installed on both sides of the second gear operating part (13) and the bearing case (90), while the second idler gear (121) is rotatably installed on both sides of the second gear operating part (13) and the bearing case (90), and is meshed with a third driven gear (34) formed on the cutter shaft (30) drawn into the cutter operating part 16.

6. The all-weather weld bead remover of claim 1, wherein a nut insertion part (91) is formed on one side of the bearing insertion part (95), and a nut (35) is screw-coupled to a front end of the cutter shaft (30) supported by a bearing (B) inserted into the bearing insertion part (15) (95) to prevent separation of the cutter shaft (30).

7. The all-weather weld bead remover of claim 1, wherein the cutter (40) is fitted and coupled to a cutter support part (31) formed on an outer circumferential surface of the cutter shaft (30) positioned at the cutter operating part (16), a cutter fixing bolt (32) coupled to one front end of the cutter shaft (30) presses and fixes a side surface of the cutter (40), and when tightening or loosening the cutter fixing bolt (32), a wrench fitted into a wrench groove (33) formed at the other front end of the cutter shaft (30) is held to prevent rotation of the cutter shaft (30).

8. The all-weather weld bead remover of claim 2, wherein a rear upper end of the pair of skid plate (60) is provided with a support elevating holder (130) having a guide projection (131) protruding at a central portion of a rear surface thereof, the driving roller support (132), which has a guide groove (133) recessed therein for fitting and coupling the guide projection (131) and has a driving roller (134) rotatably installed at a lower portion thereof, is in close contact with a rear surface of the support elevating holder (130) in a vertically movable manner, and the elevating control bolt (135), which penetrates through and is coupled to the driving roller support (132), is screw-coupled to any one of the plurality of fixing holes (136) formed vertically in the support elevating holder (130).
